# EUROPEAN PATENT APPLICATION

(11) **EP 2 597 762 A2**
(43) Date of publication of application: **29.05.2013**
(21) Application number: 12185570.4
(22) Date of filing: 22.09.2012
(51) Int. Cl.: H02K 17/20

(54) **Rotors of induction motors**

(30) Priority: 23.11.2011 US 201113303370
(71) Applicant: Hamilton Sundstrand Space Systems International, Inc., Windsor Locks CT 06096-1010 (US)
(72) Inventor: Gieras, Jacek F., Glastonbury, Connecticut 06033 (US); Martin, Christopher Curtis, Byron, Illinois 61010 (US)
(74) Representative: Tomlinson, Kerry John

(57) **Abstract**

A rotor (100) for an induction motor includes a rotor body (101), the rotor body defining a central cavity (106) configured to receive a motor shaft and having a plurality of radial slots (107) formed therethrough, each radial slot of the plurality of radial slots extends outward radially from the central cavity to an outer surface of the rotor body, a plurality of conductive bars (102) arranged within the plurality of radial slots of the rotor body, wherein each conductive bar of the plurality of conductive bars extend outward radially within each radial slot from the central cavity to the outer surface of the rotor body, a first end ring (104) arranged on the rotor body in electrical communication with each conductive bar of the plurality of conductive bars, and a second end ring (104) arranged on the rotor body in electrical communication with each conductive bar of the plurality of conductive bars.

## Description

### BACKGROUND OF THE INVENTION

The present invention is directed to induction motors, and more particularly, rotors of induction motors.

Generally, an induction motor includes a plurality of design specifications which are affected by an operating environment. One example of such a design specification is the starting current required to initiate rotation of an induction motor from rest. Depending upon relative temperature of the operating environment of the induction motor, the starting current required to start the motor from rest may be increased above a feasible amount of current (e.g., as available from a power source such as a battery). Under cryogenic temperature ranges (e.g., temperature ranges of a relatively low mean value, such as below -150 °C, -238 °F or 123 K) the starting current may be even further affected, thereby negating the possibility of use of conventional rotor designs in cryogenic environments with available current limitations.

### BRIEF DESCRIPTION OF THE INVENTION

According to the present invention, a rotor of an induction motor includes a rotor body, the rotor body defining a central cavity configured to receive a motor shaft and having a plurality of radial slots formed therethrough, each radial slot of the plurality of radial slots extends outward radially from the central cavity to an outer surface of the rotor body, a plurality of current-conducting bars arranged within the plurality of radial slots of the rotor body, wherein each current-conducting bar of the plurality of current-conducting bars extend outward radially within each radial slot from the central cavity to the outer surface of the rotor body, a first end ring arranged on the rotor body in electrical communication with each current-conducting bar of the plurality of current-conducting bars, and a second end ring arranged on the rotor body in electrical communication with each current-conducting bar of the plurality of current-conducting bars.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is an isometric view of a rotor of an induction motor, according to an exemplary embodiment of the present invention;

FIG. 2 is an isometric view of rotor laminations of the rotor of FIG. 1;

FIG. 3 is an isometric view of the rotor laminations and end rings of the rotor of FIG. 1;

FIG. 4 is an expanded cross sectional view of an arc segment of the rotor laminations of the rotor of FIG. 1; and

FIG. 5 is a cross-sectional view of an induction motor, according to an exemplary embodiment of the present invention.

### DETAILED DESCRIPTION OF THE INVENTION

As described above, an induction motor includes a plurality of design specifications, including a target starting current, which may be affected by an operating environment. In particular, in cryogenic temperature ranges the starting current required to start the motor may exceed the specification and, thus, exclude conventional rotor designs in cryogenic environments. However, exemplary embodiments of the present invention provide a rotor of an induction motor which overcomes the drawbacks of conventional rotor designs in response to operation within cryogenic temperature ranges. The technical effects and benefits of one or more embodiments of the present invention include a rotor which includes a relatively stable starting current which exploits the benefits of deep bar and surface skin current effects to achieve a low starting current in cryogenic temperature ranges.

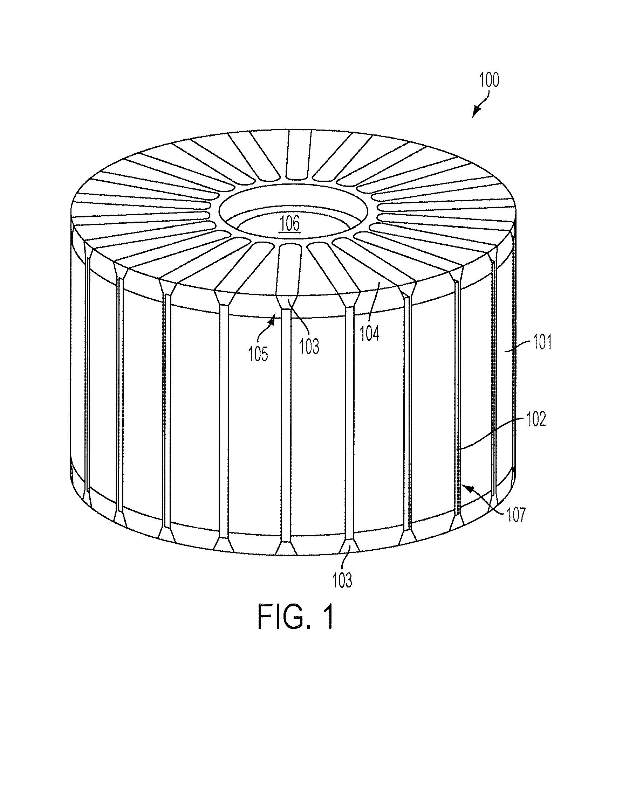

Turning to FIG. 1, an isometric view of a rotor of an induction motor rotor 100 is illustrated. As shown, the rotor 100 includes rotor body 101. The rotor body 101 may include a plurality of rotor laminations. For example, the rotor body 101 may be formed of silicon steel laminations (e.g., M19 specification silicon steel) or other suitable laminations, or may be formed of sintered ferromagnetic powder. The rotor 100 may include a central cavity 106 formed through the rotor body 101 such that a motor shaft may be arranged therein. For example, the central cavity 106 may be a generally cylindrical cavity configured to engage a cylindrical motor shaft. The rotor body 101 may include a plurality of radial slots 107 formed therethrough. The radial slots 107 may be formed proximate the central cavity 106 and extend radially outward therefrom. In one embodiment, each radial slot of the plurality of radial slots 107 is an open slot, rather than a semi-closed slot, formed through an outer cylindrical surface of the rotor body 101. Further, each radial slot of the plurality of radial slots 107 may be configured to receive and support a deep current conductive bar 102. Each deep bar 102 may be formed of a conductive material configured to have a relatively high resistivity at room temperature which decreases at a stable rate in response to a decrease in temperature. Thus, as temperature decreases to cryogenic levels, the resistivity of the deep bars 102 should be in a range typical of common conductors at room temperature. In this manner, the operational characteristics of the rotor 100 at cryogenic temperatures may be on par with those of conventional rotors at room temperature.

A suitable material for the deep bars 102 may include an alloy of aluminum bronze. According to at least one exemplary embodiment, the composition of aluminum bronze may include about 81% Cu, 4.0% Fe, 4.5% Ni (or Co), 9 to 9.5% Al, and 1.0% Mn. Other alloys with somewhat similar resistive properties are also applicable. Therefore, the particular alloy composition depicted here is merely explanatory in nature to aid in understanding of the current-conducting effects of such a material under cryogenic temperatures. For example, according to one exemplary embodiment, the aluminum bronze alloy comprises more than 5% aluminum and at least 80% copper. Furthermore, the aluminum bronze alloy may comprise at least eighty-one percent (81%) copper and nine percent (9%) aluminum. Furthermore, the aluminum bronze alloy may further comprise at least four percent (4%) nickel or cobalt. Even further, the aluminum bronze alloy may further comprise at least four percent (4%) iron. Accordingly, several different compositions may be equivalently applicable to any desired implementation.

Turning back to FIG. 1, the rotor 100 further includes end rings 104 arranged on the rotor body 101. Each end ring 104 may include a plurality of radial slots 105 formed therethrough which are each complementary to an associated radial slot 107 of the rotor body 101. Therefore, some or all of the deep bars 102 may protrude into associated radial slots 105 of each end ring 104. The end rings 104 may be formed of a conductive material with a relatively low resistivity at room temperature. For example, an appropriate conductive material may include copper or aluminum. According to at least one exemplary embodiment of the present invention, each end ring 104 is formed of elemental copper. Furthermore, according to at least one exemplary embodiment of the present invention, each end ring 104 is electrically joined to all deep bars 102 through a plurality of conductive formations 103. The conductive formations 103 may be welds or other suitable formations configured to promote electrical conductivity between each end ring 104 through the deep bars 102. If the conductive formations 103 are welds, an appropriate welding technique which exploits the material properties of the deep bars 102 and end rings 104 may be used. For example, an inert gas welding technique including tungsten inert gas (TIG) welding may be used. Thus, oxidation may be reduced and good electrical conductivity achieved. Furthermore, a cross sectional area of each radial slot 105 may be chosen based upon the desired welding technique to promote proper coalescence through the formation of a weld pool filling each of the radial slots 105. According to at least one exemplary embodiment of the present invention, each radial slot 105 has a triangular cross section promoting the formation of a weld pool in maximal contact with material from the end rings 104 relative to weld pool contact with each deep bar 102.

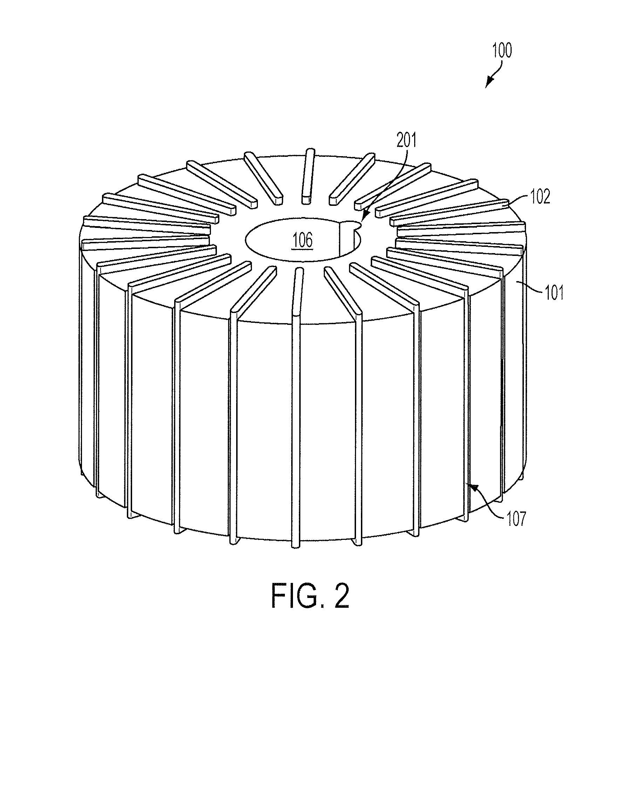

Turning now to FIG. 2, an isometric view of rotor laminations of the rotor of FIG. 1 is provided. As illustrated, each deep bar 102 may protrude from the rotor body 101 to promote engagement with the end rings 104 illustrated in FIG. 1. Furthermore, a notch or key slot 201 may be formed along the cavity 106 to promote securing of a motor shaft thereto.

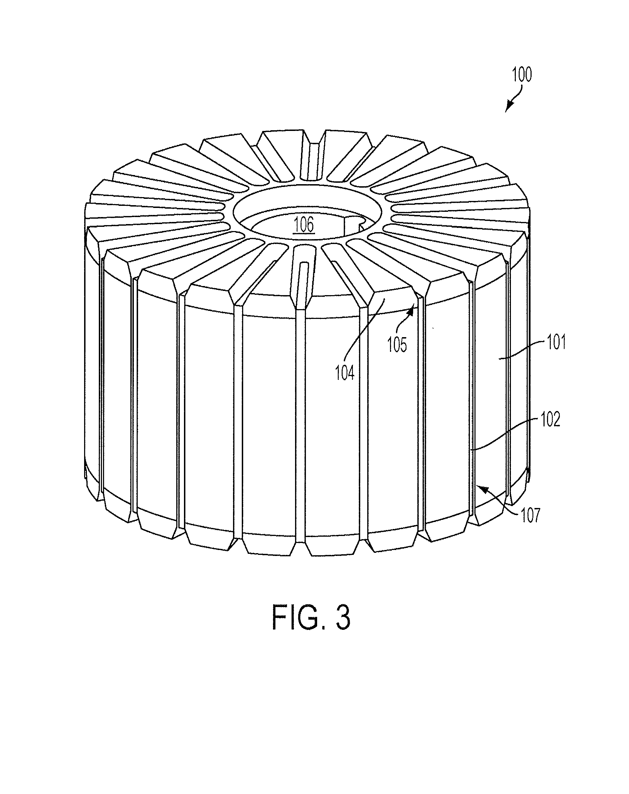

Turning now to FIG. 3, an isometric view of the rotor laminations and end rings of the rotor of FIG. 1 is provided. As illustrated, each deep bar 102 protrudes from the rotor body 101 to promote engagement with the end rings 104. As further illustrated, the triangular cross section of the plurality of slots 105 promote formation of a weld pool for use in joining each end ring 104 to each deep bar 102.

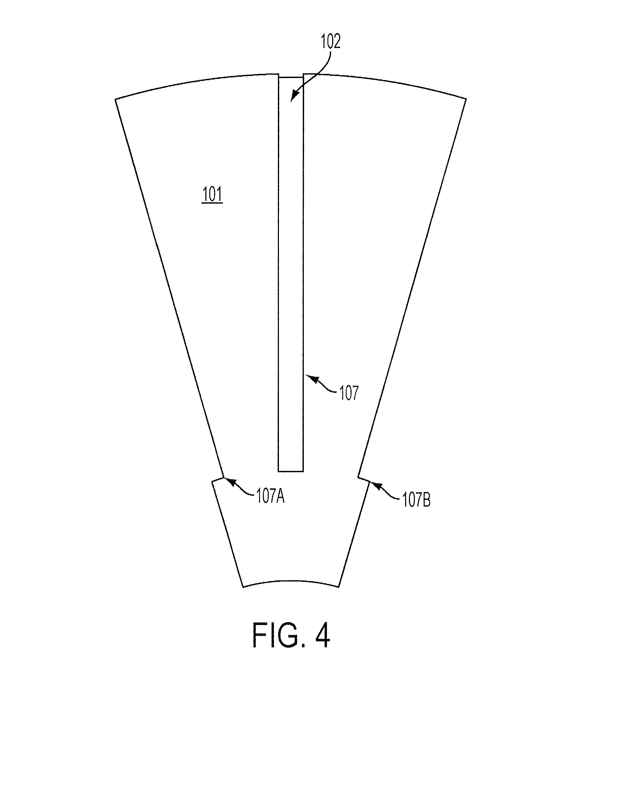

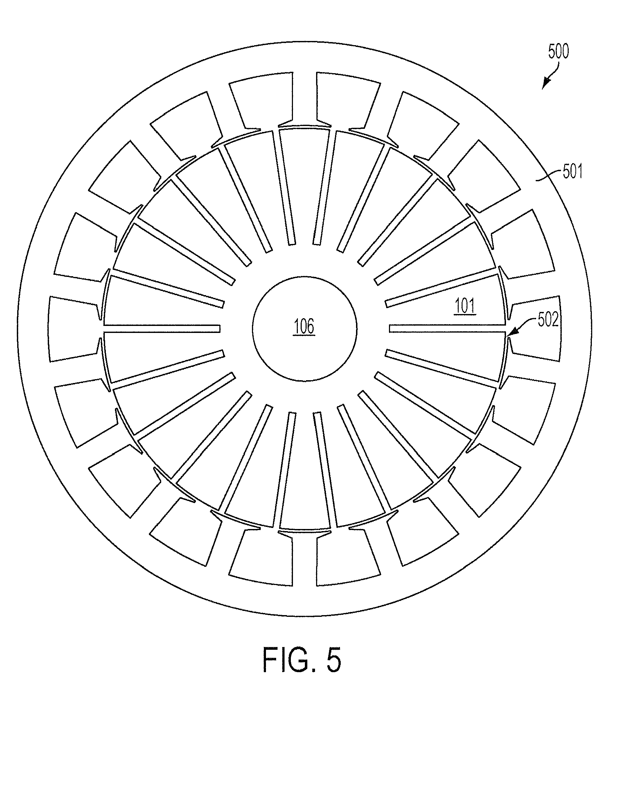

Turning now to FIG. 4, an expanded cross-sectional view of an arc segment of the rotor laminations of the rotor of FIG. 1 is provided. As shown, each radial slot 107 of the rotor body 101 extends outward radially. Furthermore, each radial slot 107 has a rectangular cross section disposed to support an associated deep bar 102. Moreover, although each deep bar 102 protrudes axially into end rings 104, there is virtually no radial protrusion. Therefore, a relatively stable and minimal air gap between the rotor 100 and a stator is maintained during rotation of the rotor 100 (illustrated in FIG. 5). For clarity, radial slots 107A and 107B are illustrated without a deep bar arranged therein.

FIG. 5 is a cross-sectional view of an induction motor 500 including the rotor 100 of FIG. 1, according to an exemplary embodiment of the present invention. It should be noted that end rings 104 and deep bars 102 have been omitted from the illustration for clarity. A central axis of the central cavity 106 of the rotor 100 is collinear with a central axis of the stator 501. Due to the particular arrangement of the radial slots within the rotor body 101, and due to the relatively high resistivity of associated deep bars, when the rotational frequency of the rotor 100 is on par with the rotational frequency of the stator 501 (e.g., stalled motor or a motor at rest), electrical current and magnetic flux are concentrated near an air gap 502 between the rotor 100 and stator 501 (e.g., skin effect). As the rotational frequency of the rotor 100 increases relative to the stator 501 (e.g., increasing speed of rotation), a deep bar effect forms driving electrical current into each radial slot 107 through the deep current conductive bars 102. Due to the skin effect and deep bar effect promoted by both the material of each deep current-conducting bar 102 and end ring 104, even at cryogenic temperatures, the rotor 100 allows for a relatively low starting current and stable steady-state operating current. As such, the rotor 100 may be relatively stable and appropriate for use in cryogenic environments such as within liquid hydrogen tanks (e.g., for cryogenic recirculation / thermal conditioning applications) and space or aerospace environments.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor for an induction motor, comprising:
a rotor body, the rotor body defining a central cavity configured to receive a motor shaft and having a plurality of radial slots formed therethrough, wherein each radial slot of the plurality of radial slots extends outward radially from the central cavity to an outer surface of the rotor body;
a plurality of current-conducting bars arranged within the plurality of radial slots of the rotor body, wherein each current-conducting bar of the plurality of current-conducting bars extend outward radially within each radial slot from the central cavity to the outer surface of the rotor body;
a first end ring arranged on the rotor body in electrical communication with each current-conducting bar of the plurality of current-conducting bars; and
a second end ring arranged on the rotor body in electrical communication with each current-conducting bar of the plurality of current-conducting bars.

2. The rotor of claim 1, wherein the rotor body is a laminated rotor body formed of a plurality of laminations or formed of sintered ferromagnetic powder; preferably
wherein the laminated rotor body is formed of a plurality of silicon steel laminations.

3. The rotor of claim 1 or 2, wherein each current-conducting bar of the plurality of current-conducting bars is formed of a material with a resistivity higher than elemental copper.

4. The rotor of claim 1, 2 or 3, wherein each current-conducting bar of the plurality of current-conducting bars is formed of a bronze alloy.

5. The rotor of claim 4, wherein each current-conducting bar of the plurality of current-conducting bars is formed of an aluminum bronze alloy.

6. The rotor of claim 5, wherein the aluminum bronze alloy comprises more than 5% aluminum.

7. The rotor of claim 5 or 6, wherein the aluminum bronze alloy comprises at least eighty-one percent (81 %) copper and nine percent (9%) aluminum.

8. The rotor of claim 6 or 7, wherein the aluminum bronze alloy further comprises at least four percent (4%) nickel or cobalt; preferably
wherein the aluminum bronze alloy further comprises at least four percent (4%) iron.

9. The rotor of any preceding claim, wherein the first end ring comprises:
a central hole complementary to the central cavity of the rotor body; and
a second plurality of radial slots formed therethrough arranged complementary to each radial slot of the plurality of radial slots of the rotor body.

10. The rotor of claim 9, wherein each current-conducting bar of the plurality of current-conducting bars protrudes into an associated radial slot of the second plurality of radial slots of the first end ring.

11. The rotor of claim 10, further comprising an electrically conductive formation formed within each radial slot of the second plurality of radial slots of the first end ring, the electrically conductive formation being configured to promote electrical conductivity between each current-conducting bar and the first end ring; preferably
wherein the electrically conductive formation is a weld; more preferably wherein each weld is a tungsten inert gas (TIG) formed weld.

12. The rotor of claim 11, wherein each radial slot of the second plurality of radial slots has a triangular cross section configured to support each electrically conductive formation.

13. The rotor of claim 9, 10, 11 or 12, wherein the second end ring comprises:
a central hole complementary to the central cavity of the rotor body; and
a third plurality of radial slots formed therethrough arranged complementary to each radial slot of the plurality of radial slots of the rotor body.

14. The rotor of claim 13, wherein each current-conducting bar of the plurality of current-conducting bars protrudes into an associated radial slot of the third plurality of radial slots of the second end ring.

15. The rotor of claim 14, further comprising an electrically conductive formation formed within each radial slot of the third plurality of radial slots of the second end ring, the electrically conductive formation being configured to promote electrical conductivity between each current-conducting bar and the second end ring; preferably
wherein each radial slot of the third plurality of radial slots has a triangular cross section configured to support each electrically conductive formation.
